# FASCICULE DE BREVET EUROPEEN

(11) **EP 2 971 826 B1**
(45) Date de publication et mention de la délivrance du brevet: **29.03.2017**
(21) Numéro de dépôt: 14711829.3
(22) Date de dépôt: 25.02.2014
(51) Int. Cl.: F16D 3/84, F16D 3/205

(54) **SOUFFLET DE PROTECTION DES ELEMENTS MALE ET FEMELLE D'UN JOINT DE TRANSMISSION ET JOINT DE TRANSMISSION EQUIPE D'UN TEL SOUFFLET DE PROTECTION**
HÜLLE ZUM SCHUTZ INEINANDERGREIFENDER TEILE EINES GETRIEBEGELENKS UND MIT SOLCH EINER SCHUTZHÜLLE AUSGESTATTETES GETRIEBEGELENK
BOOT PROTECTING THE MALE AND FEMALE ELEMENTS OF A TRANSMISSION JOINT AND TRANSMISSION JOINT EQUIPPED WITH SUCH A PROTECTIVE BOOT

(30) Priorité: 15.03.2013 FR 1352309
(43) Date de publication de la demande: 20.01.2016
(73) Titulaire: Trelleborg Boots France, 44470 Carquefou (FR)
(72) Inventeur: BOUHOUR, Jean-Luc, 44690 La Haye Fouassiere (FR); MAITAY, Frédéric, 44440 Riaille (FR); DAHERON, Sébastien, 85260 Saint Andre 13 Voies (FR)
(74) Mandataire: Godineau, Valérie
(86) Numéro de dépôt international: PCT/FR2014/050402
(87) Numéro de publication internationale: WO 2014/140442

(56) Documents cités:
- DE-A1- 2 927 648
- US-A- 5 879 238
- US-A1- 2006 133 888

## Description

La présente invention concerne un soufflet de protection des éléments mâle et femelle d'un joint de transmission, ainsi qu'un joint de transmission équipé d'un tel soufflet de protection.

Elle concerne plus particulièrement un soufflet de protection des éléments mâle et femelle d'un joint de transmission dont les éléments mâle et femelle sont respectivement formés l'un, d'un arbre de transmission à bras radiaux porte-galet, l'autre, encore appelé bol ou tulipe, d'un boîtier apte à loger au moins partiellement lesdits galets insérables à l'intérieur du boîtier par l'extrémité ouverte dudit boîtier, ledit soufflet qui se présente sous forme d'un corps creux allongé apte à être traversé par ledit arbre comportant l'une de ses extrémités, dite première extrémité, solidarisable audit arbre et l'autre de ses extrémités, dite deuxième extrémité, positionnable par emboitement à recouvrement sur l'extrémité ouverte du boîtier, ce soufflet présentant un épaulement périphérique interne.

L'utilisation de joint, dit homocinétique, comme élément de transmission de puissance pour transmettre de la puissance d'entraînement en rotation entre un arbre moteur de véhicule et les roues dudit véhicule est classique.

Dans les véhicules automobiles, par exemple, entre la boîte de vitesse et chaque roue du véhicule, il est prévu une transmission constituée de deux arbres reliés entre eux par un organe de transmission mécanique qui nécessite une lubrification. Généralement, l'arbre issu de la boîte de vitesse est équipé d'une tulipe qui constitue l'élément femelle de l'organe de transmission reliant ce premier arbre au second arbre de transmission. Cet élément femelle affecte la forme d'une cavité généralement trilobée. Les lobes délimitent ainsi des logements destinés chacun à recevoir par exemple un galet. Chaque galet est porté par un élément mâle qui présente trois tourillons à galet. Cet élément mâle est lui-même couplé au second arbre de transmission. Un soufflet de protection d'un tel joint tripode homocinétique du type décrit ci-dessus peut comprendre un soufflet cylindro-conique qui, à une extrémité, comporte une grande base polylobée qui, à l'état monté, s'applique sur la surface extérieure de la tulipe ou bol du joint. Cette grande base présente donc une surface intérieure qui a une forme complémentaire à la forme extérieure de la tulipe polylobée. A l'état monté du soufflet sur ladite tulipe, une bague ou collier entoure la grande base du soufflet se présentant sous forme d'une surface circulaire concentrique à l'axe longitudinal du soufflet pour appliquer la surface polylobée de cette grande base contre le pourtour de la tulipe. La petite base du soufflet est quant à elle fixée sur l'arbre de transmission solidaire de l'élément mâle du joint.

Il est également connu des joints dont l'élément mâle est un arbre à roulement à billes, tel que décrit dans le brevet EP-0.791.150. Dans le cas de tel joint, le soufflet présente un épaulement radial interne réalisé d'une seule pièce avec ledit corps de soufflet. Cet épaulement forme une surface d'appui empêchant un délogement des billes du soufflet lors des opérations de montage.

Ce phénomène de possibilité de sortie des organes rotatifs portés par l'arbre de l'élément mâle du soufflet peut également être observé dans le cas d'un arbre à bras porte-galet. Toutefois, les galets étant aptes à venir en contact direct avec ledit épaulement, il existe un risque de déformation dudit épaulement empêchant un arrêt franc et immédiat de la course de l'arbre à bras porte-galet lors du contact des galets avec ledit épaulement.

Enfin, un soufflet de protection du type précité est connu du document DE-2927648 qui constitue l'état de la technique le plus proche. Dans ce document, l'épaulement périphérique interne présente une surface régulière suivant la direction circonférentielle et un profil courbe suivant une direction radiale de sorte que chaque galet peut rouler librement suivant la direction circonférentielle le long dudit épaulement sans rencontrer d'obstacles, tels que creux ou bosses, il en résulte un contact uniquement ponctuel entre galet et épaulement avec les risques de déformation de l'épaulement qui peuvent en résulter.

Un but de la présente invention est donc de proposer un soufflet du type précité dont la conception permet d'éviter un délogement de l'arbre à bras porte-galet du soufflet lors du montage sans générer de déformation du soufflet.

Un autre but de la présente invention est de proposer un soufflet dont la conception permet d'obtenir un arrêt franc et immédiat de la course de l'arbre à bras porte-galet à l'intérieur du soufflet sans nuire à la longueur de ladite course.

A cet effet, l'invention a pour objet un soufflet de protection des éléments mâle et femelle d'un joint de transmission, lesdits éléments mâle et femelle étant respectivement formés l'un, d'un arbre de transmission à bras radiaux porte-galet, l'autre, encore appelé bol ou tulipe, d'un boîtier apte à loger au moins partiellement lesdits galets insérables à l'intérieur du boîtier par l'extrémité ouverte dudit boîtier, ledit soufflet qui se présente sous forme d'un corps creux allongé apte à être traversé par ledit arbre comportant l'une de ses extrémités, dite première extrémité, solidarisable audit arbre, et l'autre de ses extrémités, dite deuxième extrémité, positionnable par emboitement à recouvrement sur l'extrémité ouverte du boîtier, ce soufflet présentant un épaulement périphérique interne, caractérisé en ce que la surface de l'épaulement tournée vers la deuxième extrémité du soufflet est munie d'au moins deux logements ouverts en direction de ladite deuxième extrémité, l'intérieur de chaque logement formant un siège à assise concave apte à recevoir à emboîtement partiel un galet et à former une surface de réception par contact d'appui dudit galet.

Grâce au fait que la surface de l'épaulement tournée vers la deuxième extrémité du soufflet est munie de logements décalés angulairement et ouverts en direction de ladite deuxième extrémité et que chaque logement présente un intérieur formant un siège à assise concave apte à recevoir à emboîtement partiel un galet, il en résulte un risque réduit de déformation du soufflet. En effet, comme ladite assise est apte à former une surface de réception d'un galet, par contact d'appui en particulier de la surface périphérique externe dite de roulement dudit galet, il en résulte non pas un contact d'appui ponctuel entre galet et épaulement mais au contraire un contact d'aire élargie avec une répartition des efforts qui permet de réduire les risques de déformation dudit épaulement de soufflet.

De préférence, la deuxième extrémité du soufflet est délimitée par une paroi polylobée dont chaque lobe est formé par un renflement radial interne de ladite paroi, un logement étant disposé dans chaque zone de l'épaulement s'étendant entre deux lobes.

De préférence, au moins l'un, de préférence chacun, des logements est ouvert d'une part, en direction de la deuxième extrémité, d'autre part, en direction de l'intérieur du soufflet.

De préférence, l'assise du siège d'au moins l'un, de préférence de chacun, des logements présente un profil courbe en arc de cercle suivant une direction circonférentielle.

Chaque logement forme donc, suivant la direction circonférentielle, une cavité qui, depuis l'un de ses bords en direction de son bord opposé, présente une profondeur qui croît puis décroît. Cette cavité est apte à loger à emboîtement partiel le galet. Ainsi, chaque galet est calé à l'intérieur de son logement suivant la direction circonférentielle.

De préférence, l'assise du siège d'au moins l'un, de préférence de chacun des logements présente un profil courbe suivant une direction radiale avec une profondeur de logement qui décroit depuis l'intérieur en direction de l'extérieur du soufflet. Cette forme de l'assise est choisie en particulier lorsque la surface périphérique externe de roulement du galet est une surface annulaire sphérique.

Généralement, le corps de soufflet comporte, entre ses première et deuxième extrémités, une pluralité de spires coaxiales formant la partie déformable du soufflet dans le sens d'un rapprochement ou d'un écartement desdites extrémités, ledit épaulement étant disposé au niveau de la zone de liaison entre la partie déformable et la deuxième extrémité du soufflet.

L'invention a encore pour objet un joint de transmission notamment pour transmission de véhicule du type comprenant un élément mâle formé d'un arbre de transmission à bras radiaux porte-galet, un élément femelle, encore appelé bol ou tulipe, formé d'un boîtier coiffant par son extrémité ouverte au moins partiellement lesdits galets, un soufflet de protection se présentant sous forme d'un corps creux allongé traversé par ledit arbre et comportant l'une de ses extrémités, dite première extrémité solidarisable audit arbre et l'autre de ses extrémités, dite deuxième extrémité positionnable par emboîtement à recouvrement sur l'extrémité ouverte du boîtier, caractérisé en ce que le soufflet est du type précité, et en ce qu'au moins une partie du galet et de l'assise du siège du logement à l'intérieur duquel ledit galet est apte à être partiellement logé présente des formes respectivement convexe et concave complémentaires pour une réception à emboîtement partiel du galet à l'intérieur dudit logement.

De préférence, chaque galet comporte une face frontale, une face arrière et une surface périphérique externe de roulement reliant lesdites faces entre elles, la partie du galet présentant une forme convexe complémentaire de l'assise du siège du logement est formée par au moins une partie de la surface périphérique externe de roulement du galet.

De préférence, chaque galet comportant une face frontale, une face arrière et une surface périphérique externe de roulement reliant lesdites faces entre elles, le boîtier de l'élément femelle comporte un fond et une paroi latérale inscrite dans un cylindre et formée extérieurement d'une alternance de parties concaves et convexes réparties régulièrement de manière angulaire autour de l'axe longitudinal dudit cylindre, chaque partie convexe, plus éloignée de l'axe longitudinal du cylindre que la partie concave définissant intérieurement une paire de pistes en regard sur lesquelles la surface périphérique externe de roulement d'un galet est apte à se déplacer, à l'état inséré au moins partiellement des galets dans ledit boîtier.

De préférence, la deuxième extrémité du soufflet est délimitée par une paroi polylobée dont chaque lobe, formé par un renflement radial interne de ladite paroi, s'insère dans une partie concave du boîtier, à l'état monté à emboîtement à recouvrement du soufflet sur ledit boîtier et chaque zone de l'épaulement, s'étendant entre deux lobes de la paroi polylobée de la deuxième extrémité du soufflet, et dans laquelle un logement est disposé, ferme au moins partiellement une extrémité du chemin de guidage formé par la paire de pistes du boîtier, à l'état monté du soufflet à recouvrement au moins partiel des éléments mâle et femelle.

L'invention sera bien comprise à la lecture de la description suivante d'exemples de réalisation, en référence aux dessins annexés dans lesquels :
la figure 1 représente une vue partielle en perspective d'un joint conforme à l'invention, une partie dudit joint ayant été arrachée pour visualiser l'intérieur du joint ;
la figure 2 représente une vue en perspective d'un soufflet conforme à l'invention prise côté deuxième extrémité dudit soufflet ;

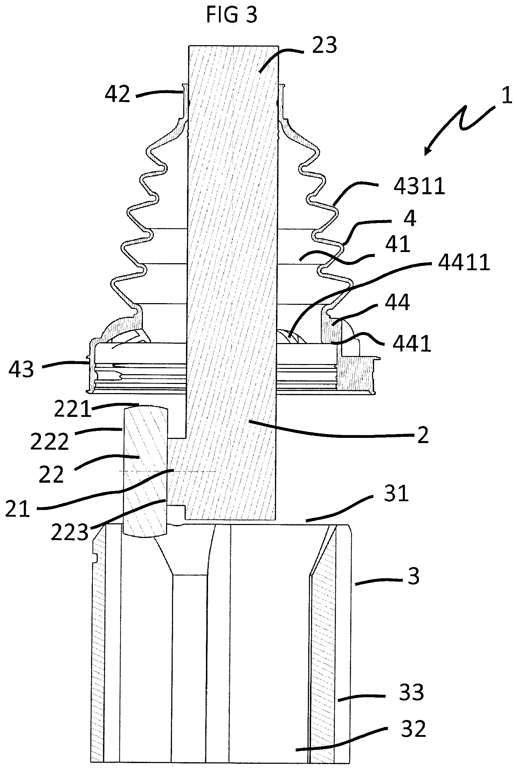

la figure 3 représente une vue partielle en coupe d'un joint conforme à l'invention en position éclatée des éléments le constituant ;
la figure 4A représente une vue en coupe d'un joint à l'état assemblé des éléments en position de montage ;
la figure 4B représente une vue de gauche de la figure 4A et

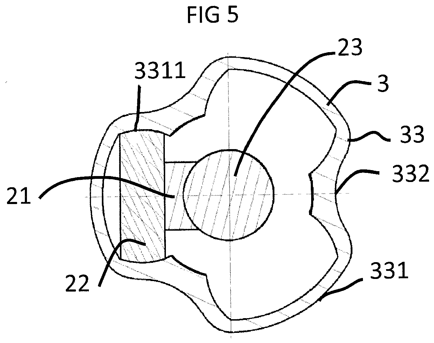

la figure 5 représente une vue en coupe horizontale de la figure 4A.

Comme mentionné ci-dessus, l'invention concerne un soufflet 4 de protection des éléments mâle 2 et femelle 3 d'un joint 1 de transmission homocinétique, ainsi qu'un tel joint. Ce joint permet par exemple la transmission d'un mouvement rotatif entre l'arbre issu de la boîte de vitesse et l'arbre de roue dans une transmission de véhicule. Comme mentionné ci-dessus, l'élément 2 mâle est formé d'un arbre 23 de transmission à trois bras 21 radiaux porte-galet 22. Ces trois bras radiaux sont répartis à 120° autour dudit arbre. Chaque bras radial porte une bague de forme générale cylindrique disposée à l'intérieur du galet 22 et des moyens d'accouplement de la bague et du galet formés ici par une couronne d'aiguilles disposée entre la surface radiale externe de la bague et la surface radiale interne du galet. Ces moyens d'accouplement permettent donc un pivotement relatif entre le galet et la bague autour d'un axe de révolution commun au galet et à la bague, cet axe correspondant ici à l'axe longitudinal dudit bras.

Chaque galet 22 comporte une face 222 frontale, une face 223 arrière et une surface 221 périphérique externe de roulement reliant lesdites faces 222 et 223 entre elles. La face arrière 223 du galet est la face du galet tournée vers l'arbre 23 à bras 21 porte-galet 22.

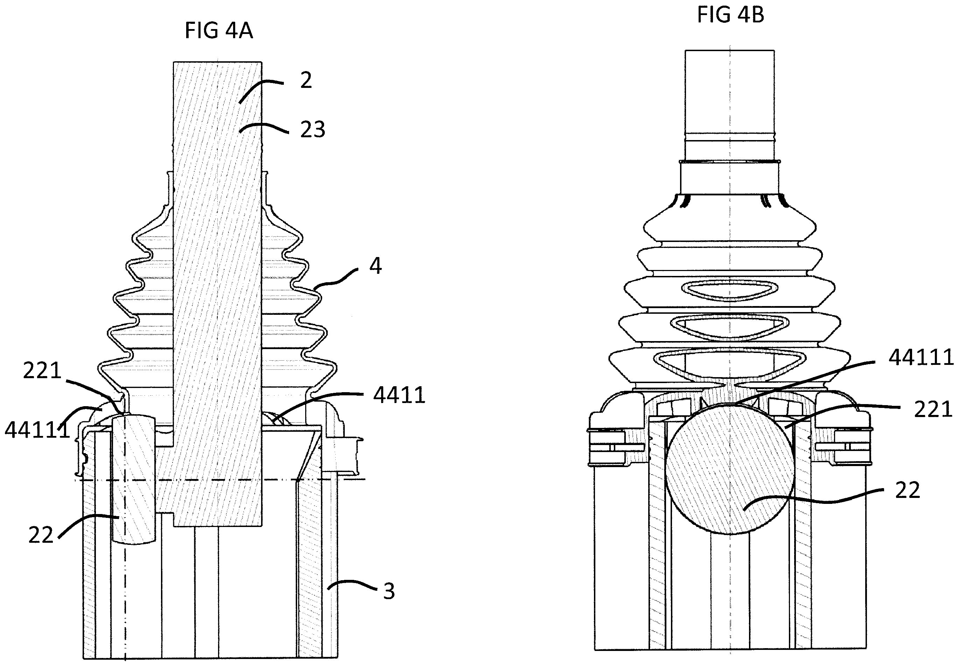

Dans les exemples représentés, la surface 221 périphérique externe de roulement du galet 22, radialement externe par rapport à l'axe longitudinal du bras portant ledit galet ou à l'axe de révolution de la bague et du galet, est une surface convexe annulaire sphérique qui présente, vue en coupe transversale, une forme en arc de cercle, comme l'illustre la figure 4A.

Le joint 1 comporte encore un élément 3 femelle. Cet élément 3 femelle affecte la forme d'un boîtier 30 apte à loger au moins partiellement lesdits galets 22 insérables à l'intérieur du boîtier 30 par l'extrémité 31 ouverte du boîtier 30.

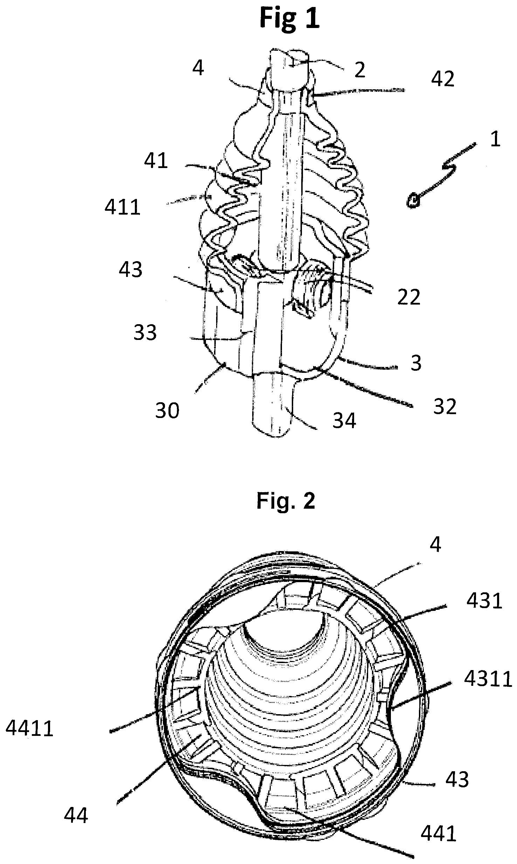

Dans l'exemple représenté, ce boîtier 30 comporte un fond 32 et une paroi 33 latérale inscrite dans un cylindre et formée extérieurement d'une alternance de parties concaves 332 et convexe 331 réparties régulièrement de manière angulaire autour de l'axe longitudinal dudit cylindre. Ce boîtier 30 est ici muni au niveau de son fond 32 d'un prolongement extérieur appelé queue et représenté en 34 à la figure 1. Cette queue forme un prolongement de l'arbre auquel ledit joint doit être relié. Chaque partie convexe 331 est plus éloignée de l'axe longitudinal du cylindre que la partie 332 concave. Cette partie convexe 331 définit intérieurement une paire de pistes 3311 en regard sur lesquelles la surface 221 périphérique externe de roulement d'un galet 22 est apte à rouler, à l'état inséré au moins partiellement des galets 22 dans ledit boîtier 30.

Dans l'exemple représenté, le boîtier 30 comporte trois parties concaves et trois parties convexes et trois paires de pistes. Chaque piste est formée par une partie de surface cylindrique de la paroi latérale périphérique du boîtier parallèle à l'axe longitudinal du cylindre à l'intérieur duquel la paroi latérale périphérique du boîtier s'inscrit. La forme de la section transversale de la piste est celle d'un arc correspondant à la génératrice du galet.

Le joint 1 comporte encore un soufflet 4 de protection réalisé sous forme d'une pièce moulée par injection ou autre. Ce soufflet 4 de protection est en matière de synthèse. Ce soufflet 4 de protection se présente sous forme d'un corps 41 creux allongé apte à être traversé par l'arbre 23 à bras 21 porte-galet 22. Ce corps 41 creux comporte une première extrémité 42 solidarisable à l'arbre 23 et une deuxième extrémité 43 positionnable par emboîtement à recouvrement sur l'extrémité 31 ouverte du boîtier 30. Le soufflet 4 présente encore un épaulement 44 périphérique interne formé par deux surfaces radiales internes et une surface axiale reliant lesdites surfaces radiales entre elles. La surface 441 de l'épaulement 44 tournée vers la deuxième extrémité 43 du soufflet, qui est une surface radiale par rapport audit soufflet, est munie de trois logements 4411 ouverts en direction de ladite deuxième extrémité 43. Chaque logement 4411 dont l'intérieur forme un siège 44111 à assise concave est apte à recevoir à emboîtement partiel un galet. L'assise concave dudit siège est ainsi apte à former une surface de réception par contact d'appui de la surface périphérique externe de roulement dudit galet.

Dans l'exemple représenté, la deuxième extrémité 43 du soufflet 4 est délimitée par une paroi 431 trilobée dont chaque lobe 4311 est formé par un renflement radial interne de ladite paroi 431. Un logement 4411 est disposé dans chaque zone de l'épaulement 44 s'étendant entre deux lobes 4311. L'épaulement 44 et en particulier la surface 441 de l'épaulement 44 tournée vers la deuxième extrémité du soufflet comporte donc trois logements 4411 espacés angulairement de 120°.

Chaque lobe 4311 de la paroi 431 trilobée de cette deuxième extrémité 43 du soufflet s'insère dans une partie 332 concave du boîtier 30 à l'état monté à emboîtement à recouvrement du soufflet 4 sur ledit boîtier 30.

Dans cette configuration, chaque zone de l'épaulement 44, s'étendant entre deux lobes 4311 de la paroi 431 trilobée de la deuxième extrémité 43 du soufflet et dans laquelle un logement 4411 est disposé, ferme au moins partiellement une extrémité du chemin de guidage formé par une paire de pistes 3311 du boîtier 30, à l'état monté du soufflet 4 à recouvrement au moins partiel des éléments mâle et femelle.

Chacun des logements 4411 est ouvert d'une part, en direction de la deuxième extrémité 43 du soufflet 4, d'autre part, en direction de l'intérieur du soufflet 4.

L'assise du siège de chaque logement présente un profil courbe en arc de cercle suivant une direction circonférentielle et suivant une direction radiale avec dans la direction radiale, une profondeur de logement qui décroît depuis l'intérieur en direction de l'extérieur du soufflet. Cette forme est choisie en fonction de la forme de la surface périphérique externe de roulement du galet.

Le corps 41 de soufflet comporte encore, entre ses première et deuxième extrémités 42, 43, une pluralité de spires 411 coaxiales formant la partie déformable du soufflet dans le sens d'un rapprochement ou d'un écartement desdites extrémités 42, 43. Ces spires sont ici réalisées parallèles. L'épaulement 44 est disposé au niveau de la zone de liaison entre la partie déformable et la deuxième extrémité 43 du soufflet 4.

Lors du montage du joint, l'élément 2 mâle est inséré à l'intérieur du soufflet par introduction de l'arbre à bras porte-galets côté deuxième extrémité du soufflet jusqu'à faire saillie de la première extrémité du soufflet. L'élément 3 femelle est ensuite rapporté et recouvert au niveau de l'extrémité ouverte du boîtier de l'élément femelle par la deuxième extrémité du soufflet.

Au cours de ce montage, si l'arbre à bras porte-galets vient, par ses galets, en contact d'appui avec la surface de l'épaulement du soufflet tournée vers la deuxième extrémité, comme l'illustrent les figures 4A et 4B, lesdits galets reposent par leur surface périphérique externe de roulement convexe en appui sur l'assise concave du siège formée par un logement dudit épaulement. Ce contact sur une grande surface limite tout risque de déformation du soufflet au niveau dudit épaulement et permet un arrêt franc et immédiat du galet lors du déplacement axial de l'arbre à bras porte-galet à l'intérieur du soufflet depuis la deuxième extrémité du soufflet en direction de la première extrémité du soufflet.

## Revendications

1. Soufflet (4) de protection des éléments mâle (2) et femelle (3) d'un joint (1) de transmission, lesdits éléments mâle (2) et femelle (3) étant respectivement formés l'un (2), d' un arbre (23) de transmission à bras (21) radiaux porte-galet (22), l'autre (3), encore appelé bol ou tulipe, d'un boîtier (30) apte à loger au moins partiellement lesdits galets (22) insérables à l'intérieur du boîtier (30) par l'extrémité (31) ouverte dudit boîtier (30), ledit soufflet (4) qui se présente sous forme d'un corps (41) creux allongé apte à être traversé par ledit arbre (23) comportant l'une de ses extrémités, dite première extrémité (42), solidarisable audit arbre (23), et l'autre de ses extrémités, dite deuxième extrémité (43), positionnable par emboitement à recouvrement sur l'extrémité (31) ouverte du boîtier (30), ce soufflet (4) présentant un épaulement (44) périphérique interne, **caractérisé en ce que** la surface (441) de l'épaulement (44) tournée vers la deuxième extrémité (43) du soufflet (4) est munie d'au moins deux logements (4411) ouverts en direction de ladite deuxième extrémité (43), l'intérieur de chaque logement (4411) formant un siège (44111) à assise concave apte à recevoir à emboîtement un galet (22) et à former une surface de réception par contact d'appui dudit galet (22).

2. Soufflet (4) selon la revendication 1,
**caractérisé en ce que** la deuxième extrémité (43) du soufflet (4) est délimitée par une paroi (431) polylobée dont chaque lobe (4311) est formé par un renflement radial interne de ladite paroi (431), un logement (4411) étant disposé dans chaque zone de l'épaulement (44) s'étendant entre deux lobes (4311).

3. Soufflet (4) selon la revendication 2,
**caractérisé en ce que** la deuxième extrémité (43) est trilobée et l'épaulement (44) comporte trois logements (4411) espacés angulairement de 120°.

4. Soufflet (4) selon l'une des revendications précédentes,
**caractérisé en ce qu'**au moins l'un, de préférence chacun, des logements (4411) est ouvert d'une part, en direction de la deuxième extrémité (43), d'autre part, en direction de l'intérieur du soufflet (4).

5. Soufflet (4) selon l'une des revendications précédentes,
**caractérisé en ce que** l'assise du siège (44111) d'au moins l'un, de préférence de chacun, des logements (4411) présente un profil courbe en arc de cercle suivant une direction circonférentielle.

6. Soufflet (4) selon l'une des revendications précédentes,
**caractérisé en ce que** l'assise du siège (4411) d'au moins l'un, de préférence de chacun des logements (4411) présente un profil courbe suivant une direction radiale avec une profondeur de logement (4411) qui décroit depuis l'intérieur en direction de l'extérieur du soufflet.

7. Soufflet (4) selon l'une des revendications précédentes,
**caractérisé en ce que** le corps (41) de soufflet comporte, entre ses première et deuxième extrémités (42, 43), une pluralité de spires (411) coaxiales formant la partie déformable du soufflet dans le sens d'un rapprochement ou d'un écartement desdites extrémités (42, 43), ledit épaulement (44) étant disposé au niveau de la zone de liaison entre la partie déformable et la deuxième extrémité (43) du soufflet (4).

8. Joint de transmission notamment pour transmission de véhicule du type comprenant un élément mâle (2) formé d'un arbre (23) de transmission à bras (21) radiaux porte-galet (22), un élément (3) femelle, encore appelé bol ou tulipe, formé d'un boîtier (30) coiffant par son extrémité ouverte au moins partiellement lesdits galets (22), un soufflet (4) de protection se présentant sous forme d'un corps (41) creux allongé traversé par l'arbre (23) et comportant l'une de ses extrémités, dite première extrémité (42) solidarisable audit arbre (23) et l'autre de ses extrémités, dite deuxième extrémité (43) positionnable par emboîtement à recouvrement sur l'extrémité (31) ouverte du boîtier (30), **caractérisé en ce que** le soufflet (4) est conforme à l'une des revendications 1 à 7, au moins une partie du galet (22) et de l'assise du siège du logement (4411) à l'intérieur duquel ledit galet (22) est apte à être partiellement logé présentant des formes respectivement convexe et concave complémentaires pour une réception à emboîtement partiel du galet à l'intérieur dudit logement.

9. Joint de transmission selon la revendication 8,
**caractérisé en ce que** chaque galet (22) comportant une face (222) frontale, une face (223) arrière et une surface (221) périphérique externe de roulement reliant lesdites faces (222, 223) entre elles, la partie du galet (22) présentant une forme convexe complémentaire de l'assise du siège (44111) du logement (4411) est formée par au moins une partie de la surface (221) périphérique externe de roulement du galet (22).

10. Joint selon l'une des revendications 8 ou 9 du type dont chaque galet (22) comporte une face (222) frontale, une face (223) arrière et une surface (221) périphérique externe de roulement reliant lesdites faces (222, 223) entre elles, **caractérisé en ce que** le boîtier (30) de l'élément (3) femelle comporte un fond (32) et une paroi (33) latérale inscrite dans un cylindre et formée extérieurement d'une alternance de parties concaves (332) et convexes (331) réparties régulièrement de manière angulaire autour de l'axe longitudinal dudit cylindre, chaque partie convexe (331), plus éloignée de l'axe longitudinal du cylindre que la partie concave (332) définissant intérieurement une paire de pistes (3311) en regard sur lesquelles la surface (221) périphérique externe de roulement d'un galet (22) est apte à se déplacer, à l'état inséré au moins partiellement des galets (22) dans ledit boîtier (30).

11. Joint selon la revendication 10,
**caractérisé en ce que** la deuxième extrémité (43) du soufflet (4) est délimitée par une paroi (431) polylobée dont chaque lobe (4311), formé par un renflement radial interne de ladite paroi (431), s'insère dans une partie (332) concave du boîtier (30), à l'état monté à emboîtement à recouvrement du soufflet (4) sur ledit boîtier (30) et **en ce que** chaque zone de l'épaulement (44), s'étendant entre deux lobes (4311) de la paroi (431) polylobée de la deuxième extrémité (43) du soufflet (4), et dans laquelle un logement (4411) est disposé, ferme au moins partiellement une extrémité du chemin de guidage formé par la paire de pistes (3311) du boîtier (30), à l'état monté du soufflet (4) à recouvrement au moins partiel des éléments mâle (2) et femelle (3).

## Patentansprüche

1. Hülle (4) zum Schutz des männlichen (2) und weiblichen (3) Elements eines Getriebegelenks (1), wobei das männliche (2) und weibliche (3) Element jeweils, das eine (2), von einer Transmissionswelle (23) mit radialen Armen (21), die Rollen (22) tragen, das andere (3), auch als Schale oder Tulpe bezeichnet, von einem Gehäuse (30), das imstande ist, mindestens teilweise die Rollen (22) aufzunehmen, die in das Gehäuse (30) durch das geöffnete Ende (31) des Gehäuses (30) einsetzbar sind, gebildet ist, wobei die Hülle (4), die die Form eines länglichen Hohlkörpers (41) hat, der imstande ist, von der Welle (23) durchquert zu sein, eines seiner Enden, bezeichnet als erstes Ende (42), das mit der Welle (23) fest verbindbar ist, und das andere seiner Enden, bezeichnet als zweites Ende (43), das durch überlappendes Rasten auf dem offenen Ende (31) des Gehäuses (30) positionierbar ist, aufweist, wobei diese Hülle (4) einen internen peripheren Absatz (44) aufweist, **dadurch gekennzeichnet, dass** die Oberfläche (441) des Absatzes (44), die zum zweiten Ende (43) der Hülle (4) zeigt, mit mindestens zwei in Richtung des zweiten Endes (43) geöffneten Aufnahmen (4411) ausgestattet ist, wobei das Innere jeder Aufnahme (4411) einen Sitz (44111) mit konkaver Sitzfläche bildet, der imstande ist, eine Rolle (22) rastend aufzunehmen und eine Empfangsoberfläche durch Stützkontakt der Rolle (22) zu bilden.

2. Hülle (4) nach Anspruch 1,
**dadurch gekennzeichnet, dass** das zweite Ende (43) der Hülle (4) von einer mehrlappigen Wand (431) begrenzt ist, von der jeder Lappen (4311) von einer internen radialen Wulst der Wand (431) begrenzt ist, wobei eine Aufnahme (4411) in jeder Zone des Absatzes (44) angeordnet ist, die sich zwischen zwei Lappen (4311) erstreckt.

3. Hülle (4) nach Anspruch 2,
**dadurch gekennzeichnet, dass** das zweite Ende (43) dreilappig ist und der Absatz (44) drei in einem Winkel von 120° beabstandete Aufnahmen (4411) aufweist.

4. Hülle (4) nach einem der vorangehenden Ansprüche,
**dadurch gekennzeichnet, dass** mindestens eine, vorzugsweise jede der Aufnahmen, (4411) zum einen in Richtung des zweiten Endes (43), zum anderen in Richtung des Innern der Hülle (4) offen ist.

5. Hülle (4) nach einem der vorangehenden Ansprüche,
**dadurch gekennzeichnet, dass** die Sitzfläche des Sitzes (44111) von mindestens einer, vorzugsweise jeder, der Aufnahmen (4411) ein kreisbogenförmig gekrümmtes Profil gemäß einer Umfangsrichtung aufweist.

6. Hülle (4) nach einem der vorangehenden Ansprüche,
**dadurch gekennzeichnet, dass** die Sitzfläche des Sitzes (4411) von mindestens einer, vorzugsweise jeder, der Aufnahmen (4411) ein gemäß einer radialen Richtung gekrümmtes Profil mit einer Tiefe der Aufnahme (4411) aufweist, die vom Innern in Richtung des Äußeren der Hülle abnimmt.

7. Hülle (4) nach einem der vorangehenden Ansprüche,
**dadurch gekennzeichnet, dass** der Körper (41) einer Hülle zwischen seinem ersten und zweiten Ende (42, 43) eine Vielzahl von koaxialen Windungen (411) aufweist, die den in Richtung einer Annäherung oder einer Beabstandung der Enden (42, 43) verformbaren Teil der Hülle bilden, wobei der Absatz (44) im Bereich der Verbindungszone zwischen dem verformbaren Teil und dem zweiten Ende (43) der Hülle (4) angeordnet ist.

8. Getriebegelenk, insbesondere für ein Fahrzeuggetriebe, umfassend ein männliches Element (2), gebildet von einer Transmissionswelle (23) mit radialen Armen (21), die Rollen (22) tragen, ein weibliches Element (3), auch als Schale oder Tulpe bezeichnet, gebildet von einem Gehäuse (30), das mit seinem offenen Ende die Rollen (22) mindestens teilweise bedeckt, wobei eine Schutzhülle (4) die Form eines länglichen Hohlkörpers (41) hat und von der Welle (23) durchquert wird und eines seiner Enden, bezeichnet als erstes Ende (42), das mit der Welle (23) fest verbindbar ist, und das andere seiner Enden, bezeichnet als zweites Ende (43), das durch überlappendes Rasten auf dem offenen Ende (31) des Gehäuses (30) positionierbar ist, aufweist, **dadurch gekennzeichnet, dass** die Hülle (4) einem der Ansprüche 1 bis 7 entspricht, wobei mindestens ein Teil der Rolle (22) und der Sitzfläche des Sitzes der Aufnahme (4411), im Innern derselben die Rolle (22) imstande ist, teilweise aufgenommen zu sein, jeweils komplementäre konvexe und konkave Formen für eine teilweise rastende Aufnahme der Rolle im Innern der Aufnahme aufweist.

9. Getriebegelenk nach Anspruch 8,
**dadurch gekennzeichnet, dass** jede Rolle (22) eine Frontseite (222), eine Rückseite (223) und eine externe periphere Laufoberfläche (221), welche die Seiten (222, 223) miteinander verbindet, aufweist, wobei der Teil der Rolle (22), der eine zur Sitzfläche des Sitzes (44111) der Aufnahme (4411) komplementäre konvexe Form aufweist, von mindestens einem Teil der externen peripheren Laufoberfläche (221) der Rolle (22) gebildet ist.

10. Gelenk nach einem der Ansprüche 8 oder 9 des Typs, bei dem jede Rolle (22) eine Frontseite (222), eine Rückseite (223) und eine externe periphere Laufoberfläche (221), welche die Seiten (222, 223) miteinander verbindet, aufweist, **dadurch gekennzeichnet, dass** das Gehäuse (30) des weiblichen Elements (3) einen Boden (32) und eine Seitenwand (33) aufweist, die in einen Zylinder eingeschrieben ist und außen von einer Abfolge von konkaven (332) und konvexen (331) Abschnitten gebildet ist, die winklig regelmäßig um die Längsachse des Zylinders verteilt sind, wobei jeder konvexe Abschnitt (331), der von der Längsachse des Zylinders weiter als der konkave Abschnitt (332) entfernt ist, innen ein Paar von gegenüberliegenden Pisten (3311) bildet, auf denen die externe periphere Laufoberfläche (221) einer Rolle (22) imstande ist, sich im mindestens teilweise eingesetzten Zustand der Rollen (22) in dem Gehäuse (30) zu verlagern.

11. Gelenk nach Anspruch 10,
**dadurch gekennzeichnet, dass** das zweite Ende (43) der Hülle (4) von einer mehrlappigen Wand (431) begrenzt ist, von der jeder Lappen (4311), der von einer internen radialen Wulst der Wand (431) gebildet ist, im überlappend rastend montierten Zustand der Hülle (4) auf dem Gehäuse (30) in einen konkaven Abschnitt (332) des Gehäuses (30) eingreift und dass jede Zone des Absatzes (44), die sich zwischen zwei Lappen (4311) der mehrlappigen Wand (431) des zweiten Endes (43) der Hülle (4) erstreckt und in welcher eine Aufnahme (4411) angeordnet ist, mindestens teilweise ein Ende des Führungswegs verschließt, das von einem Paar von Pisten (3311) des Gehäuses (30) im montierten Zustand der Hülle (4) in mindestens teilweiser Überlappung des männlichen (2) und weiblichen (3) Elements gebildet ist.

## Claims

1. A boot (4) protecting the male (2) and female (3) elements of a transmission joint (1), said male (2) and female (3) elements respectively being formed for one (2), by a transmission shaft (23) with radial roller-holder (22) arms (21), for the other (3), also called bowl or bell, by a casing (30) able to at least partially house said rollers (22) able to be inserted inside the casing (30) through the open end (31) of said casing (30), said boot (4) assuming the form of an elongated hollow body (41) able to be traversed by said shaft (23) including one of its ends, called first end (42), able to be secured to said shaft (23), and the other of its ends, called second end (43), able to be positioned by nesting overlapping the open end (31) of the casing (30), this boot (4) having an inner peripheral shoulder (44), **characterized in that** the surface (441) of the shoulder (44) turned toward the second end (43) of the boot (4) is provided with at least two housings (4411) open toward said second end (43), the inside of each housing (4411) forming a seat (44111) with a concave seat bottom able to receive a roller (22) by nesting and form a receiving surface by bearing contact from said roller (22).

2. The boot (4) according to claim 1,
**characterized in that** the second end (43) of the boot (4) is defined by a multi-lobed wall (431) whereof each lobe (4311) is formed by an inner radial bulge of said wall (431), a housing (4411) being arranged in each zone of the shoulder (44) extending between two lobes (4311).

3. The boot (4) according to claim 2,
**characterized in that** the second end (43) has three lobes and the shoulder (44) includes three housings (4411) angularly spaced apart by 120°.

4. The boot (4) according to one of the preceding claims,
**characterized in that** at least one, preferably each, of the housings (4411) is open on the one hand toward the second end (43), and on the other hand toward the inside of the boot (4).

5. The boot (4) according to one of the preceding claims,
**characterized in that** the seat bottom of the seat (44111) of at least one, preferably each, of the housings (4411) has a curved arc of circle profile in a circumferential direction.

6. The boot (4) according to one of the preceding claims,
**characterized in that** the seat bottom of the seat (4411) of at least one, preferably each of the housings (4411) has a curved profile in a radial direction with a housing (4411) depth that decreases from the inside toward the outside of the boot.

7. The boot (4) according to one of the preceding claims,
**characterized in that** the boot body (41) includes, between its first and second ends (42, 43), a plurality of coaxial turns (411) forming the deformable part of the boot in the direction bringing said ends (42, 43) closer together or further apart, said shoulder (44) being arranged at the connecting zone between the deformable part and the second end (43) of the boot (4).

8. A transmission joint, in particular for a vehicle transmission of the type comprising a male element (2) formed by a transmission shaft (23) with radial roller-holder (22) arms (21), a female element (3), also called bowl or bell, formed by a casing (30) at least partially capping, by its open end, the rollers (22), a protective boot (4) assuming the form of an elongated hollow body (41) traversed by the shaft (23) and including one of its ends, called first end (42), able to be secured to said shaft (23) and the other of its ends, called second end (43), able to be positioned by nesting overlapping the open end (31) of the casing (30), **characterized in that** the boot (4) is according to one of claims 1 to 7, at least part of the roller (22) and the seat bottom of the seat of the housing (4411) inside which said roller (22) is able to be partially housed having complementary respective convex and concave shapes for receiving the roller inside said housing with partial nesting.

9. The transmission joint according to claim 8,
**characterized in that** each roller (22) including a front face (222), a rear face (223) and an outer peripheral rolling surface (221) connecting said faces (222, 223) to one another, the part of the roller (22) having a convex shape complementary to the seat bottom of the seat (44111) of the housing (4411) is formed by at least part of the outer peripheral rolling surface (221) of the roller (22).

10. The joint according to one of claims 8 or 9 of the type whereof each roller (22) includes a front face (222), a rear face (223) and an outer peripheral rolling surface (221) connecting said faces (222, 223) to one another, **characterized in that** the casing (30) of the female element (3) includes a bottom (32) and a side wall (33) fitted into a cylinder and outwardly formed by alternating concave (332) and convex (331) parts regularly angularly distributed around the longitudinal axis of said cylinder, each convex part (331), further from the longitudinal axis of the cylinder than the concave part (332), inwardly defining a pair of facing tracks (3311) on which the outer peripheral rolling surface (221) of the roller (22) is able to move, in the state of the rollers (22) at least partially inserted in said casing (30).

11. The joint according to claim 10,
**characterized in that** the second end (43) of the boot (4) is defined by a multi-lobed wall (431) whereof each lobe (4311), formed by an inner radial bulge of said wall (431), is inserted in a concave part (332) of the casing (30), in the state of the boot (4) mounted by overlapping nesting on said casing (30) and **in that** each zone of the shoulder (44), extending between two lobes (4311) of the multi-lobed wall (431) of the second end (43) of the boot (4), and in which a housing (4411) is arranged, at least partially closes one end of the guide path formed by the pair of tracks (3311) of the casing (30), in the state of the boot (4) mounted at least partially overlapping the male (2) and female (3) elements.
